# EUROPEAN PATENT APPLICATION

(11) **EP 0 987 173 A2**
(43) Date of publication of application: **22.03.2000**
(21) Application number: 99118378.1
(22) Date of filing: 16.09.1999
(51) Int. Cl.: B62J 15/02

(54) **Device for the rapid engagement and disengagement of the stays for a bicycle mudguard**

(30) Priority: 18.09.1998 IT VR980050 U
(71) Applicant: San Giorgio Bicycle Components Srl, 35014 Fontaniva (PD) (IT)
(72) Inventor: De Poli, Livia, 35014 Fontaniva (PD) (IT)
(74) Representative: Petraz, Gilberto

(57) **Abstract**

Engagement device (10, 30) of stays (13) for bicycle mudguards to the frame of a given bicycle, more specifically to the fork thereof, comprising a space within it that is suitable for hosting and holding said stays (13), said fork being provided with a hole (38) which is suitable for cooperating with said device (10, 30), characterised in that it is made of a couple of distinct rear and front elements that are superimposed one onto the other so as to create said space between them. The engagement device (10, 30) is furthermore provided with blocking means (16; 34, 36; 35, 37), which are integral with the elements (11, 31, 12, 32) of said couple and is suitable for resiliently interacting with said hole (38) in order to keep the device (10, 30) firmly secured in the hole (38).

## Description

### TECHNICAL FIELD

The present invention relates to a device for the rapid engagement and disengagement of the stay or stays for bicycle mudguards, said device being suitably conceived in order to allow a rapid and safe disengagement of said stays in case of accident or fall of the cyclist.

The present invention finds a particularly suitable application in the field of bicycle and bicycle component manufacturing and in the field of cycling at large.

### BACKGROUND ART

There are found to be known in the art several technical solutions for the engagement of the stays for a bicycle mudguard to the forks of the bikes themselves.

Such types of engagement result to be particularly critical, especially in case of accident or fall of the cyclist, because the accomplishment of a particularly stiff constraint between forks and stays of a cycling device does not make it possible to surely obtain a disengagement of the stays from the forks themselves.

The consequence that derives from the above point is that the shock onto the frame caused by the accident or fall is resisted to less by those points of the frame itself where the mudguard stays are welded, or generally speaking, are joined to the fork, when compared to the cases where they are engaged to the fork in a rigid fashion.

In light of the above therefore, the stays which are still hooked to the forks and disengaged from the mudguard, have one of their ends completely free and pointing towards the cyclist that runs a serious risk of being transfixed or in any case seriously injured when falling.

In order to solve the above problem, a number of rapid engagement and disengagement devices have been thought out, of muguard stays to and from the fork of a bicycle, in case the latter turns out to be necessary.

For instance, document EP-A-0 803 429 discloses an engagement device that consists of a couple of distinct elements made of a moulded plastic material.

The first element of said couple of elements has a suitable recess for hosting and holding inside it the mudguard stays or just one stay, this recess being generally loop shaped, depending on the specific technical solution resorted to.

According to the device described in the above cited document, the first element is further provided with a suitable opening for hosting a hook shaped protrusion of the second element of the couple that the device dealt with is also provided with.

At a first of its ends, said second element is provided with a hole that is suitable for cooperating with a ring that the fork is provided with, said ring being located at the end of a protrusion that protrudes towards the mudguard and the stays.

In such a way then, the ring which the fork is provided with and the hole at the first end of the second element of the engagement device are coupled one to the other by resorting to a screw that accomplishes the blocking of the second element of said device.

When the mudguard is fixed onto a bicycle that is provided with such a device, said hook shaped protrusion which the second end of the second element is provided with, ends up interacting with the opening of the first element coupled to the stays.

In so doing, the engagement of the mudguard stays to the forks of a given bicycle is accomplished, said solution being a sufficiently reliable system in case of accident.

If such an event occurs, in fact the violent and sudden shock that the bicycle is subjected to turns out to be greater that the resistence offered by the clipping coupling that keeps the two elements that make up the device together, and, consequently, the stays onto the forks.

The result of such a solution is that the disengagement of said two elements is accomplished and the dangerous detachment of the stay with the risks deriving from it is therefore avoided.

However, the technical solution described in the above cited document has some disadvantages and drawbacks which are particularly relevant, first of which the fact that that engagement device is made of two separate elements.

This implies that it will be necessary to resort to a double mold at the production stage and the need of a double store capacity will arise.

Consequently costs inevitably rocket, also on account of the fact that said elements the engagement device described in the above cited document is made of must be manufactured very accurately as precise contacts and joints must be provided with great precision in order to obtain a correct operation of the device itself.

A further device for the engagement of mudguard stays to the fork of a bicycle is disclosed in document EP-A-0 694 469.

According to the technical solution therein proposed, the engagement device consists of a chamber-type element which is suitable for hosting and holding a loop shaped stay inside it, which is kept in position by the presence of a couple of plastic springs, one on each side of the chamber element, said sides being opposite to one another.

In such a way therefore said springs that interact along two opposite semicircular profiles of the hole cause the blocking of the stay inside the chamber element.

Furthermore, at the end that is opposite to that which is provided with the opening that is suitable for hosting the stay, the chamber element is provided with a suitable hole which is conjugated to it and is part of a protrusion of the fork, analogously to what was described in the above cited document EP-A-0 803 429.

Even in this case then the chamber element results to be rigidly coupled to the fork by means of a screw that goes through the two holes seen above, said screw blocking the chamber element onto said fork.

The technical solution therein given, as seen for the previous document, has the advangtage to make it possible for the stay to detach from the chamber element in case of an accident or of a bad fall of the cyclist, in so doing guaranteeing a high safety level to the cyclist himself, as the unwelding of the stay from the mudguard is avoided.

However, such a type of engagement device has the remarkable drawback that it was conceived in order to host a loop-shaped stay inside it and it cannot be adapted to the case where the mudguard is supported by two separate stays, such a thing remarkably limiting the field of application of said device.

Moreover, as it comprises a chamber element and two plastic springs, said solution need be manufactured availing of two distinct moulds which are very different from each other, this inevitably enticing rather high overall costs for the production of the device itself.

### DESCRIPTION OF THE INVENTION

The present invention aims at obviating the inconvenients and drawbacks typical of the prior art, by proposing therefore an engagement device of the stays to be applied to a bicycle mudguard with the forks of the bicycle that it is both efficient, handy, cost-effective and, last but not least, reliable for the safety of the cyclist in case of accident or fall.

The above aim is accomplished by a device having the features detailed in the main claim.

Dependent claims outline particularly advantageous forms of embodiment of the present invention.

The assembly device according to the present invention consists of a couple of distinct elements, generally made of a plastic material, which are suitable for enclosing and hosting the stays of a bicycle mudguard within the space given by the mutual superimposition of the elements of said couple.

Said elements making up the engagement device according to the present invention are positioned in a parallel position with respect to the longitudinal axis of the stays, lying therefore on parallel planes to that of a bicycle wheel which is provided with said device.

According to the present invention, the first of the elements detailed above, which will be hereafter defined as a rear element, is positioned on a parallel plane which is proximal to the plane of the wheel and with such a conformation that for most of its volume, it hosts the stays and it follows the profile of their terminal portions that point towards the fork.

In the area that is bound to host said stays, the rear element results to be furthermore provided with a first hole that is suitable for interacting with a second conjugated hole, said second hole belonging to the second element of the couple as shown below in the present specification.

Furthermore, in a position that is juxtaposed to the end that is suitable for receiving the stays, said rear element is suitably provided with a C shaped protrusion which is oriented towards the fork of the bicycle and that fulfills a specific blocking function of the whole device as it will be more detailedly outlined below.

According to the present invention, the second element of the couple making up the engagement device, hereafter defined as front element, is suitably positioned so as to have its perimetral profile matching that of the rear element and covering therefore the stays of the mudguard on the opposite side to that which is already taken up by the rear element as it was described above.

Said front element has in fact a similar conformation to the rear element except for the C shaped protrusion which the front element is not provided with.

As it was already mentioned, even said front element is provided with a second hole that is suitable for cooperating with the first hole of the rear element, said first and second holes being meant to host a suitable engagement screw inside them.

Such an engagement screw has the function of allowing the union of the elements making up the device according to the present invention, and at the same time, it accomplishes the blocking of the stays within the device itself.

As it was emphasised in the above description of the prior art, it is known that the fork of a bicycle is provided with a protrusion which is itself provided with a hole located near the hub of the wheel, said hole being generally suitable for blocking engagement devices of the stays of mudguards of known types, by dint of a screw.

According to the present invention, a suitable pivot is inserted into said hole of the fork, said pivot consisting of two separate adjacent portions with different diameters.

More particularly, the pivot utilised for blocking the engagement device to the fork of a bicycle according to the present invention has a central end portion with such a diameter that it allows the insertion of the pivot into the hole by a simple clipping or by screwing along a suitable thread which is provided both on the inside surface of the hole and on said end portion of the pivot.

Moreover, the pivot has an intermediate portion, which is found to be interposed between the end portion detailed above and the head of the pivot itself, as it has a longer diameter than that of the terminal portion so that such intermediate portion is prevented from inserting into the hole of which above.

Such an operational methodology makes it to use said intermediate portion as a blocking surface because the C shaped potrusion of the rear element of the engagement device according to the present invention ends up resiliently interacting with said intermediate portion.

In such a way therefore, a mutual blocking of the pivot that is efficaciously constrained to the fork and the rear element of the device is accomplished, with a consequent firm and reliable blocking of the stays for a bicycle mudguard.

According to a further form of embodiment of the present invention, the engagement device consists of a couple of elements, a first rear element and a second front element, which are identical with each other and are suitable for holding and enclosing the stays of a bicycle mudguard within the space found between said elements at the moment of their coupling.

According to said further form of embodiment of the present invention, each element which is shaped so as to be suitable for hosting said stays and for following their profile along their end portion, is provided with a suitable hole which is itself suitable for being inserted into a screw that as it was mentioned above has the function of mutually coupling the couple of elements that make up the engagement device and of accomplishing the blocking of the stays.

Furthermore, in correspondence with the end that is opposite to that which is inserted each element is provided with a protrusion that acts as a natural prolongment of the element itself, said prtrusion protruding along a direction towards the fork of the bicycle.

According to said further form of embodiment of the present invention, each protrusion which belongs to both the front and rear elements, is provided with a suitable protrusion that is positioned along a direction that is perpendicular to the protrusion itself, and it is turned towards the inside of the space found in between the two protuberances and created at the very moment when the device is in its operational position, that is with its rear and front elements mutually coupled.

Said protrusions according to the present invention fulfill the function of intercepting the hole which the fork is provided with so that each of said protrusions resiliently interacts with the hole simultaneously on both sides of the hole itself.

In order for the blocking of said protrusions to be effective, each protrusion has advantageously a spherically shaped cap conformation with diametral dimensions that are suitable for accomplishing an effective interaction with the size.

On the basis of such further form of embodiment of the invention there is not found to be necessary to resort to any pivot as the blocking of the engagement device of the stays for a bicycle mudguards is directly obtained at the hole of the fork; moreover, according to said form of embodiment, at the operational stage the device for the engagement results to be rotated by 90° from the position it had in the previously described form of embodiment.

The engagement device according to the present invention is therefore a valid solution to the problem relating to the safety of a cyclist in case of accident or fall as, following a sudden and violent shock, a traction force acts onto the engagement device and, once such a force is greater than a predetermined value, the engagement device automatically detaches from the fork of the bicycle.

Furthermore, besides the above mentioned safety related aspect, the engagement device according to the present invention is cost-effective, it is manufactured easily and it is further applicable to both the case where a mudguard is supported on both sides of the wheel by just one hole shaped stay and when the mudguard stays are in anumber of 2.

### DESCRIPTION OF THE DRAWINGS

Other features and advantages of the present invention will be more evident from the reading of the following description, given by way of not limiting example, with reference to the figures illustrated in the attached tables of drawings in which:
- figure 1 illutrates a schematic plan view from above of the rear (figure 1a) and front (figure 1b) making up the engagement device according to the present invention;
- figure 2 illustrates a plan view from above (figure 2a) and a side view (figure 2b) of the engagement device shown in figure 1 when at an operational stage, and
- figure 3 illustrates a side view of a further form of embodiment of the engagement device according to the present invention.

### DESCRIPTION OF A FORM OF EMBODIMENT

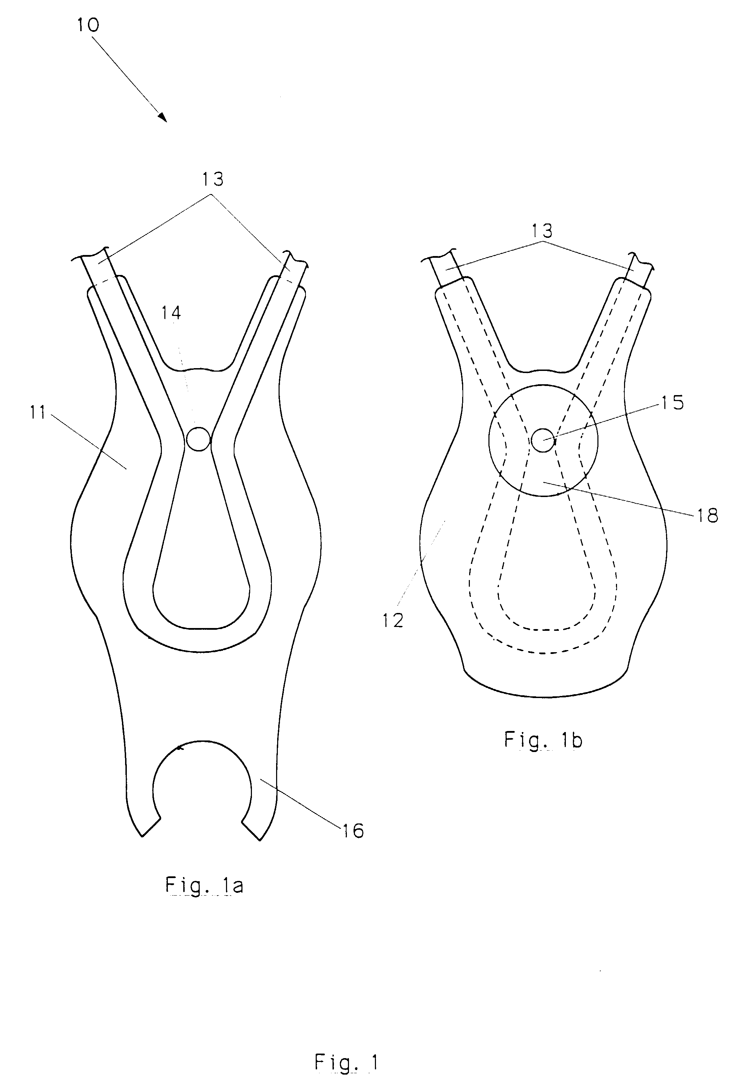

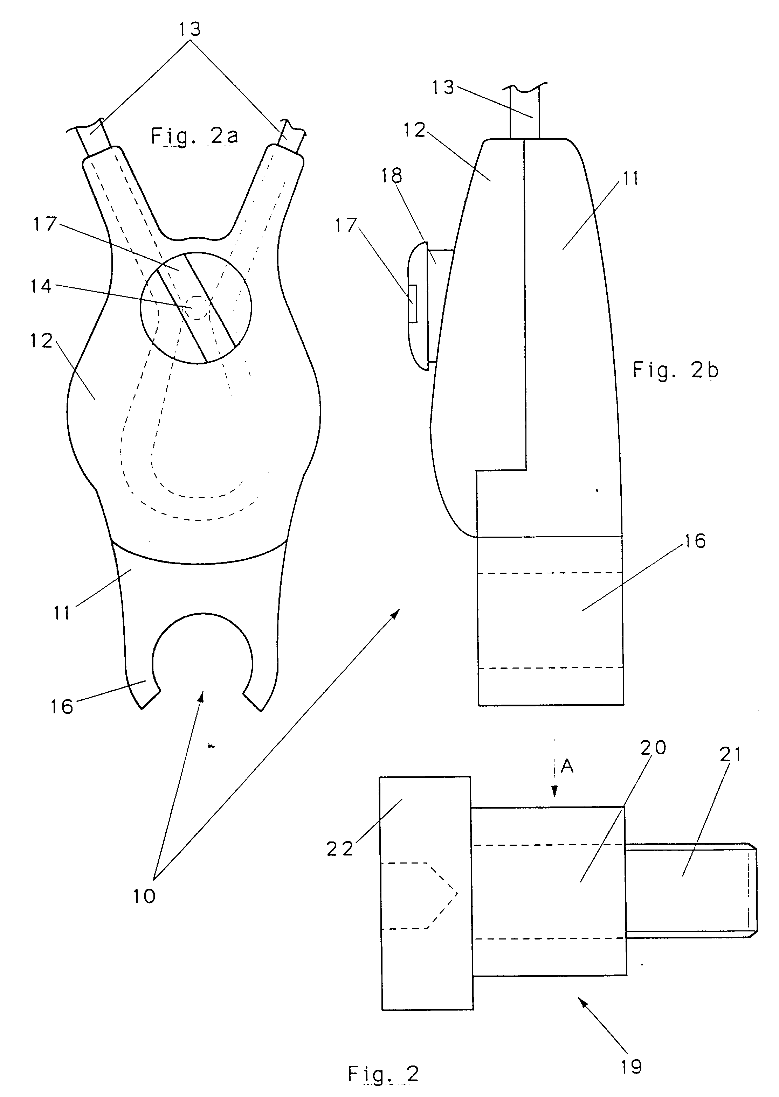

In figures 1 and 2, reference numeral 10 indicates an engagement device for the stays of a bicycle mudguard according to the present invention.

Said engagement device 10 consists of a couple of elements 11, 12 that are suitable for enclosing and holding the stays 13 of a bicycle mudguard (not shown) within the space limited by the mutual superimposition of elements 11, 12 of said couple.

Such elements 11, 12 are located in a position that is parallel to the longitudinal axes of stays 13, therefore lying on planes that are parallel to that of the wheel (not shown) of a bicycle provided with device 10 according to the present invention.

The rear element 11 of the couple of which above lies on a plane that is proximal to the plane of the wheel and it has such a conformation that most of its capacity hosts stays 13 and it follows their profile in their terminal portions that is turned to the fork.

In the area which is suitable for hosting said stays 13, the rear element 11 results to be furthermore provided with a first hole 14 that is suitable for interacting with a second hole 15 that belongs to front element 12 of the couple making up device 10 according to the present invention.

Juxtaposed to the end that is suitable for hosting stays 13, rear element 11 is suitably provided with a C-shaped protrusion 16 which is directed towards the bicycle fork and which has the function of blocking device 10 as it will be detailedly described below.

According to the present invention, front element 12 of the couple of device 10 is positioned so as to be superimposed onto rear element 11 so that their respective profiles end up mutually matching and stays 13 end up being enclosed within the space limited by said coupling.

Front element 12 has in fact a similar conformation to that of rear element 11 except for C-shaped protrusion 16 which front element 12 is not provioded with.

As it was already mentioned, even said front element 12 is provided with a second hole 15 that is suitable for cooperating with first hole 14 that belongs to rear element 11, said first 14 and second 15 holes being suitable for hosting a suitable engagement screw 17 whose correct positioning is made easier by the presence of a cylindrically shaped guide 18 which is obtained on the outer surface of front element 12.

Such an engagement screw 17 has the function of accomplishing the coupling of elements 11, 12 making up device 10 according to the poresent invention and, at the same time, of blocking stays 13 inside the device itself.

It is known that the fork of whatever bicycle is provided with a protrusion provided with a hole, in the vicinity of its terminal region, the hole being suitable for blocking the stays of a mudguard such as those previously described in this specification by means of a screw.

According to the present invention, a suitable pivot 19, made of two adjacent portions 20, 21 of different size, is inserted into said hole.

More detailedly, said pivot 19 has a first terminal portion 21 whose diameter is such that it allows the insertion of the pivot itself inside the hole, and a second intermediate portion 20, interposed between terminal portion 21 and head 22 of the pivot itself, whose diameter is greater than that of terminal portion 21 so that intermediate portion 20 is uncapable of inserting into the hole of which above.

In such a way said intermediate portion 20 is taken up by C-shaped protrusion 16 as a blocking surface, for example of the clipping type, for the blocking of device 10 to the fork (see arrow A of figure 2b).

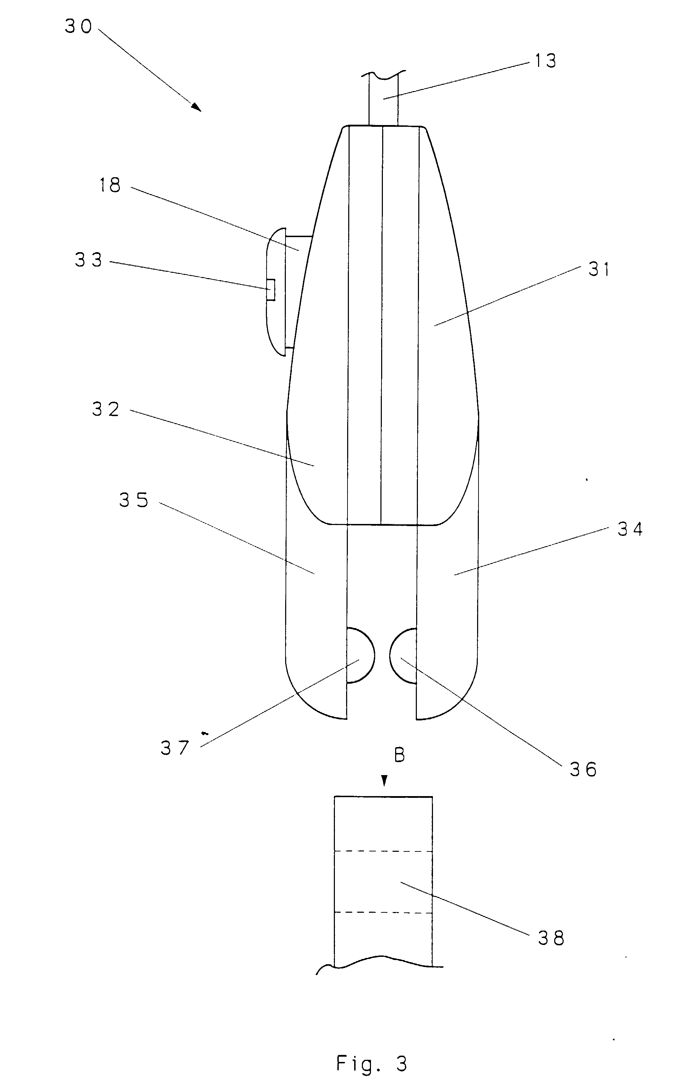

In figure 3 reference numeral 30 indicates a further form of embodiment of the engagement device according to the invention.

Said device 30 consists of a couple of identical elements 31, 32 which are suitable for holding and enclosing stays 13 of a bicycle mudguard in the space between them and obtained at the moment of their superimposition and of their subsequent coupling.

According to that form of embodiment, each element 31, 32 is provided with a suitable hole (not shown) for the insertion of a screw 33 that, analogously to what previously stated, has the function of mutually constraining said couple of elements 31, 32 making up engagement device 20 and at the same time makes it possible to accomplish the blocking of stays 13.

Moreover, in correspondence with the ends of said stays that are opposite to those 13 which are inserted, each element 31, 32 is provided with a protrusion 34, 35 that protrudes along a direction pointing to the fork (not represented) of the bicycle under consideration.

Each protrusion 34, 35 has a suitable relief 36, 37 which is located along a direction that is perpendicular to the respective protrusion 34, 35 and is turned towards the inside of the space between elements 31, 32 once in a coupled configuration.

Said protrusions 36, 37 have the function of intercepting (see arrow B in figure 3) said hole 38 which the fork is provided with so that each protrusion 36, 37 is made to interact with hole 38 on both its sides simultaneously.

In order for such a joint to be secure, each relief 36, 37 is advantageously shaped as a spherically shaped cap with a diameter that is suitable for it to efficaceously interact with the size of hole 38.

The invention was previously described with reference to some of its particular forms of embodiment.

It is nonetheless clear that the invention is not limited to these forms of embodiment, but that it comprises all modifications and variants that may be taken into consideration, without in so doing stepping out of the scope of the present patent as it was claimed.

## Claims

1. Engagement device (10, 30) of stays (13) for bicycle mudguards to the frame of a given bicycle, more specifically to the fork thereof, comprising a space within it that is suitable for hosting and holding said stays (13), said fork being provided with a hole (38) which is suitable for cooperating with said device (10, 30), characterised in that it is made of a couple of distinct rear and front elements that are superimposed one onto the other so as to create said space between them, said engagement device (10, 30) being furthermore provided with blocking means (16; 34, 36; 35, 37), which are integral with the elements (11, 31, 12, 32) of said couple and suitable for resiliently interacting with said hole (38) in order to keep the device (10, 30) firmly secured against the hole (38).

2. Engagement device (10, 30) according to claim 1, characterised in that said rear (11, 31) and front (12, 32) elements have respectively a first (14) and a second (15) holes that are suitable for the passage of a screw (17; 33) that accomplishes the coupling of said elements (11, 31; 12, 32) and the blocking of said stays (13).

3. Engagement device (10) according to claim 1 or 2, characterised in that said rear element (11) is provided with a C shaped protrusion (16) which is suitable for interacting with a portion (20) of a pivot (19) inserted into said hole (38) of the fork of a bicycle.

4. Engagement device (10) according to claim 3, characterised in that said pivot (19) has a terminal portion (21) which is suitable for being insrted into and fixed to said hole (38) and an intermediate portion (20) with a longer diameter than that of the terminal portion (21) such that it forms a joining surface available to the protrusion (16) of the rear element (11) making it possible to accomplish the blocking of the device (10) to the fork of the bicycle.

5. Engagement device (30) according to claim 1 o 2, characterised in that said rear (31) and front (32) elements are respectively provided with a protrusion (34, 35) which is provided with a relief (36, 37) that is suitable for being inserted into said hole (38) of the fork of a given bicycle.

6. Engagement device (30) according to claim 5, characterised in that said reliefs (36, 37) point towards the inside of the space found between said rear (31) and front (32) elements once said elements are coupled with each other, said reliefs (36, 37) being positioned perpendicularly to their respective protuberances (34, 35).

7. Engagement device (30) according to claim 5 or 6, characterised in that said reliefs (36, 37) are spherically cap shaped and have such dimensions that make it possible to insert them from side to side into said hole (38).

8. Engagement device (10, 30) according to anyone of the preceding claims, characterised in that said blocking means (16; 34, 36; 35, 37) are suitable for automatically disengaging from said hole (38) when overcoming a predetermined traction force exerted onto the device (10, 30).
